# FASCICULE DE BREVET EUROPEEN

(11) **EP 1 722 914 B1**
(45) Date de publication et mention de la délivrance du brevet: **15.12.2010**
(21) Numéro de dépôt: 05730930.4
(22) Date de dépôt: 23.02.2005
(51) Int. Cl.: B23H 9/00, B23H 7/28, B23H 1/04

(54) **PROCEDE DE REALISATION D'UN TARAUDAGE PAR USINAGE AUTOMATIQUE DANS UN ALESAGE**
VERFAHREN ZUR HERSTELLUNG EINES INNENGEWINDES DURCH AUTOMATISCHE BEARBEITUNG IN EINER BOHRUNG
METHOD FOR PRODUCING AN INTERNAL THREAD BY AUTOMATICALLY MACHINING IN A BORE

(30) Priorité: 10.03.2004 FR 0402500
(43) Date de publication de la demande: 22.11.2006
(73) Titulaire: Areva NP, 92400 Courbevoie (FR)
(72) Inventeur: BLOCQUEL, Alain, F-69570 Dardilly (FR)
(74) Mandataire: Lanceplaine, Jean-Claude
(86) Numéro de dépôt international: PCT/FR2005/000430
(87) Numéro de publication internationale: WO 2005/097388

(56) Documents cités:
- US-A- 2 650 979
- US-A- 2 773 968
- US-A- 3 657 507
- US-A- 4 453 071

## Description

La présente invention concerne un procédé de réalisation d'un taraudage dans un alésage par usinage automatique commandé à distance.

Dans les installations en milieu hostile, comme par exemple les réacteurs nucléaires, il est nécessaire d'effectuer des interventions notamment d'usinage qui, compte tenu du milieu, ne peuvent être commandées qu'à distance.

Une des techniques couramment utilisée pour réaliser un usinage dans ce type d'environnement est l'usinage par électroérosion. C'est le cas notamment pour réaliser un taraudage dans une pièce où il est connu d'utiliser une électrode qui est vissée dans un alésage.

Dans cette méthode, l'électrode qui a un profil se rapprochant de celui de la vis qui sera disposée ultérieurement dans le taraudage à réaliser, est animée d'un mouvement hélicoïdal correspondant à son pas. Ce mouvement lui est communiqué par une tête d'électroérosion spécifique comportant notamment une vis mère ayant le même pas.

Même si cette méthode est relativement simple à mettre en oeuvre, elle présente des inconvénients, notamment lorsque le taraudage doit être réalisé dans un alésage borgne et peu profond.

En effet, dans un tel cas, uniquement les filets d'entrée du taraudage réalisé présentent un profil proche du profil à obtenir, alors que les filets éloignés de l'entrée du taraudage présentent un profil qui s'altère progressivement si bien que le taraudage devient de plus en plus conique. Cette altération géométrique est essentiellement due à l'usure de l'électrode se produisant au fur et à mesure de sa progression dans l'alésage.

Par ailleurs, pour réaliser le taraudage selon cette méthode, il est possible d'utiliser qu'un seul régime d'usinage, soit un régime d'ébauche permettant un gain de temps d'usinage mais donnant un état de surface médiocre et susceptible de présenter des microfissures en surface, soit un régime de finition donnant un bon état de surface, mais conduisant à des temps d'usinage prohibitifs et à des usures supérieures qui affectent encore plus la géométrie finale du taraudage.

En plus de ces inconvénients, un autre inconvénient de cette méthode réside dans le fait qu'en cas d'avaries éventuelles du système de déplacement de l'électrode au cours de l'usinage de taraudage, il faut utiliser un autre système pour dévisser l'électrode et la désengager de l'alésage, au risque de détériorer le filet déjà taraudé dans l'alésage.

Enfin, cette méthode nécessite de disposer d'un système d'entraînement de l'électrode adapté à chaque valeur de pas en fonction du filet du taraudage à réaliser.

On connaît dans le document US-A-2 773 968, un dispositif d'usinage par électroérosion d'un perçage et/ou d'un taraudage. Ce dispositif comprend une électrode munie de filets dont la forme et les dimensions sont déterminées en fonction de la forme et des dimensions des filets à obtenir. L'électrode est animée d'un mouvement de rotation planétaire autour d'un axe correspondant à l'axe de l'orifice à obtenir ainsi que d'un mouvement de rotation sur elle-même. Ces deux mouvements sont coordonnés avec un mouvement d'avance pour réaliser le taraudage.

Dans ce cas également, le profil des filets n'est pas constant sur toute la longueur du taraudage.

L'invention a pour but de proposer un procédé de réalisation d'un taraudage dans un alésage par usinage automatique commandé à distance qui permettent de s'affranchir des inconvénients précédemment mentionnés.

L'invention a donc pour objet un procédé de réalisation d'un taraudage dans un alésage par usinage automatique commandé à distance, caractérisé en ce que :
- on introduit dans l'alésage une électrode munie de filets dont la forme et les dimensions ont été préalablement déterminées en fonction de la forme et des dimensions des filets du taraudage à obtenir,
- on usine par électroérosion les filets du taraudage en déplaçant de manière orbitale l'électrode dans l'alésage, sans rotation sur elle-même et selon un nombre prédéterminé de passes, et
- on règle les paramètres d'usinage en fonction de chaque passe à effectuer.

Selon d'autres caractéristiques de l'invention :
- l'ensemble des passes est effectué par une seule électrode dont la forme et les dimensions des filets sont déterminées pour tenir compte de leur usure au cours de ces passes et pour obtenir les filets souhaités du taraudage,
- l'ensemble des passes comprend :
   - une passe de préébauche,
   - une passe d'ébauche, et
   - au moins une passe de finition,
- le réglage des paramètres d'usinage au cours desdites passes consiste à modifier au moins l'intensité et la durée des impulsions du courant et la profondeur de la passe de l'électrode,
- au cours de chaque passe et simultanément au déplacement orbital de l'électrode, on imprime à cette électrode des pulsations radiales à l'alésage.

L'invention sera mieux comprise à la lecture de la description qui va suivre, donnée à titre d'exemple et faite en se référant aux dessins annexés, sur lesquels :
- la Fig. 1 est une vue schématique en élévation d'un dispositif de réalisation d'un taraudage, conforme à l'invention,
- la Fig. 2 est une vue en perspective d'une électrode du dispositif conforme à l'invention,
- la Fig. 3 est une vue en coupe axiale de l'électrode du dispositif, conforme à l'invention,
- la Fig. 4 est une vue schématique de dessus montrant le déplacement de l'électrode dans un alésage.

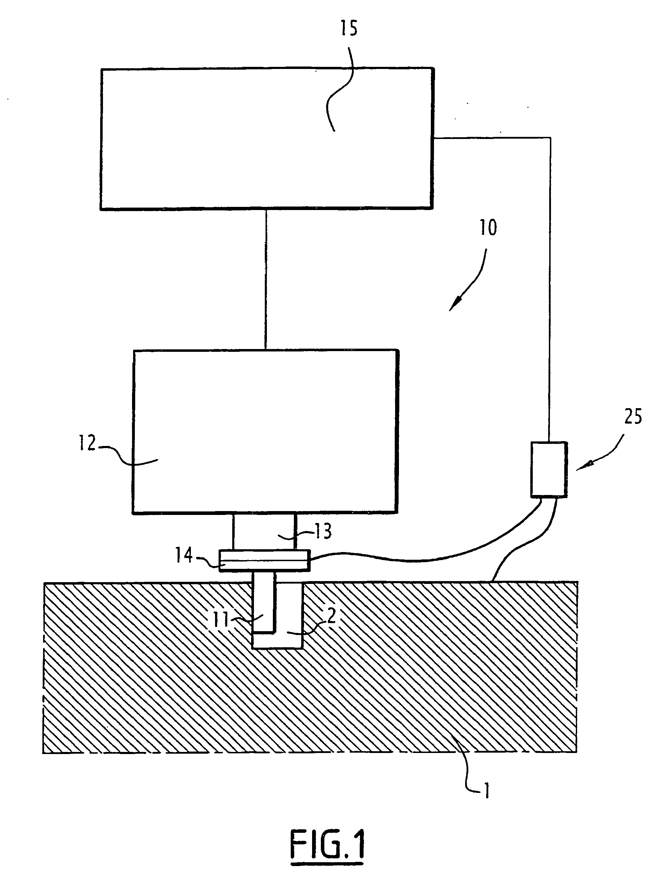

Sur la figure 1, on a représenté schématiquement une pièce 1, comme par exemple une tape d'une tubulure primaire d'un générateur de vapeur d'une centrale nucléaire qui comporte un alésage 2 dans lequel doit être restauré un taraudage au moyen d'un dispositif de réalisation de ce taraudage, désigné dans son ensemble par la référence 10.

Ainsi que montré à la figure 1, le dispositif 10 comprend une électrode 11 portée par une tête d'usinage 12 par l'intermédiaire d'une porte électrode 13. Ce porte électrode 13 peut être équipé d'une bague 14 qui permet de limiter le déplacement vertical de l'électrode 11 au-delà d'une valeur à atteindre et ainsi d'éviter tout dépassement de façon à garantir la profondeur à respecter pour le taraudage à obtenir dans l'alésage 2. La tête d'usinage 12 est une tête à 2 axes X, Y de déplacement afin de transmettre à l'électrode 11 un mouvement déterminé, comme on le verra ultérieurement.

La tête d'usinage 12 est reliée à une unité de commande désignée par la référence 15.

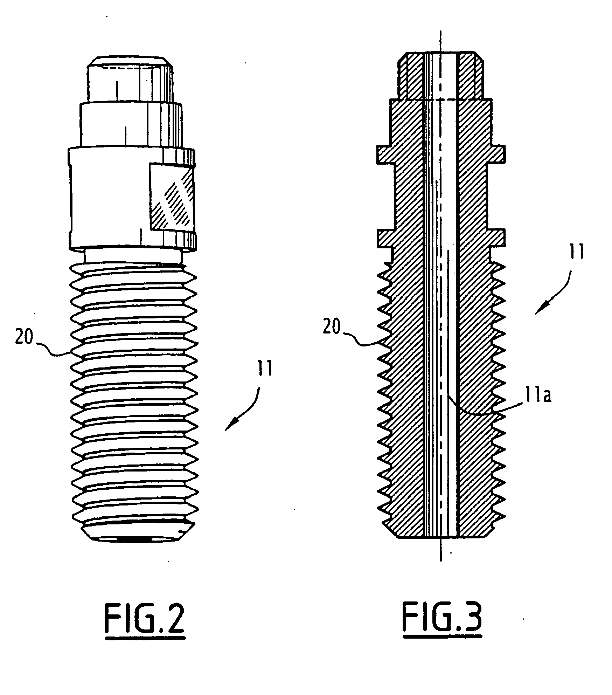

Ainsi que représentée sur les figures 2 et 3, l'électrode 11 est munie de filets 20, dont la forme et les dimensions sont préalablement prédéterminées en fonction de la forme et des dimensions des filets du taraudage à obtenir dans l'alésage 2. D'une manière générale, le diamètre à sommet de filet de l'électrode 11 est égal au diamètre à fond de filet du taraudage de l'alésage 2 moins 1 mm. Le profil des filets 20 de l'électrode 11 est déterminé pour que cette électrode puisse former par électroérosion totalement le taraudage de l'alésage 2 selon un nombre prédéterminé de passes et ce profil intègre les différents taux d'usure lors de chaque passe d'usinage afin de parvenir au terme de la dernière passe de finition, au profil à obtenir du taraudage sans avoir à effectuer un changement d'électrode au cours de l'usinage.

De préférence, l'électrode 11 est réalisée dans un alliage de « Cuprotungstène ». Elle peut également être réalisée en graphite, en cuivre, ou encore dans des alliages de molybdène et, d'une manière générale, dans tous matériaux conducteurs à l'électricité.

Le dispositif 10 comporte également des moyens 25 d'alimentation électrique reliés à l'unité de commande 15 et l'électrode 11 est relié au pôle + tandis que la pièce 1 est reliée au pôle -, ainsi que montré à la figure 1. Le dispositif 10 comporte aussi des moyens de circulation d'un fluide entre l'alésage 2 et l'électrode 11 constitué d'un fluide diélectrique, comme par exemple de l'eau déminéralisée. A cet effet et comme représenté à la figure 3, l'électrode 11 est pourvue d'un canal axial 11a de circulation de ce fluide. La circulation de ce fluide est réalisée par injection par le canal axial 11a de l'électrode 11 ou par aspiration à l'aide de moyens classiques, non représentés.

Pour favoriser le mouvement du fluide dans la zone d'usinage du taraudage au moyen de l'électrode 11 et bien évacuer les particules électroérodées de ce taraudage, l'électrode 11 peut être animée par l'intermédiaire de la tête d'usinage 12 d'un mouvement de pulsations radial à l'alésage qui permet d'alterner régulièrement les périodes d'usinage avec des périodes de retrait de ladite électrode 11.

Le procédé de réalisation du taraudage dans l'alésage 2 se déroule de la manière suivante.

Tout d'abord, on introduit dans l'alésage 2, l'électrode 11 dont le diamètre est inférieur au diamètre de cet alésage 2, puis on usine par électroérosion les filets du taraudage dudit alésage 2 en déplaçant par l'intermédiaire de la tête d'usinage 12 de manière orbitale l'électrode 11 dans l'alésage 2 selon un nombre prédéterminé de passes et on règle les paramètres d'usinage en fonction de chaque passe à effectuer.

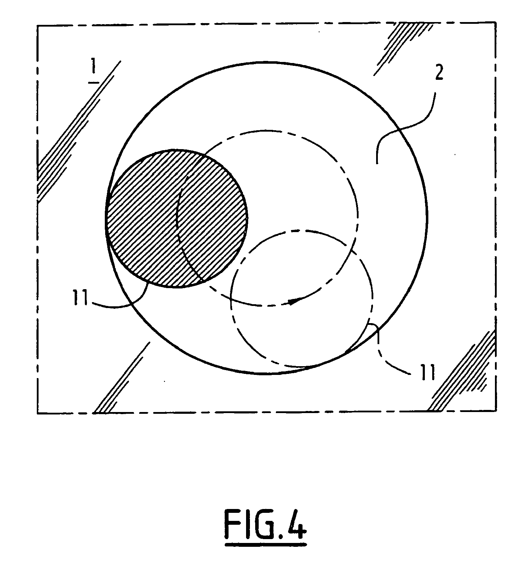

Ainsi que montré à la figure 4, le mouvement orbital communiqué à l'électrode 11 par la tête d'usinage 12 permet à celle-ci de parcourir toute la circonférence de l'alésage 2 sans rotation sur elle-même en imprimant par usinage sa forme dans ledit alésage 2 pour réaliser le taraudage. Ces mouvements sont programmés et gérés à partir de l'unité de commande 15 qui prend en charge les axes X, Y de la tête d'alésage 12 et qui effectue la mesure de la tension d'usinage au niveau de l'électrode 11 pour l'asservissement. L'unité de commande 15 permet également de faire une recherche de centre en mode automatique par palpages pour initialiser l'électrode 11 au centre de l'alésage 2 avant de débuter des séquences en mode opératoire d'usinage. En fonction du pas du taraudage à réaliser dans l'alésage 2 et donc de la profondeur à obtenir, la bague 14 disposée autour du porte électrode 13 permet de limiter le déplacement au-delà des valeurs à atteindre et éviter ainsi tout dépassement de cote et donc de garantir par conséquent la profondeur à respecter pour le taraudage.

De préférence, les différentes passes du procédé sont réalisées avec une seule et unique électrode et ces passes sont élaborées pour permettre l'obtention du profil final du taraudage dans l'alésage 2 avec l'état de surface correspondant. Ces passes sont basées sur la réalisation sur plusieurs révolutions de l'électrode avec différentes profondeurs à chaque passe et des paramètres d'usinage différents à chaque révolution de cette électrode.

Ainsi, l'électrode 11 est déplacée de manière orbitale sans rotation sur elle-même, ni avance combinée avec ce déplacement orbital.

A titre d'exemple, le procédé de réalisation du taraudage dans l'alésage 2 par l'électrode 11 comporte :
- une passe de préébauche peu profonde à puissance électrique réduite qui permet de « roder » l'électrode 11 afin d'éviter toute dégradation prématurée et préparer la surface d'usinage avant de passer en passe d'ébauche,
- une passe d'ébauche à pleine puissance électrique réalisée sur la plus grande partie de la profondeur du filet du taraudage,
- une passe de semi-finition de très faible profondeur et à puissance électrique réduite pour atténuer les effets de la passe d'ébauche à pleine puissance sur l'état de surface, et
- une passe de finition finale de très faible profondeur et de très faible puissance électrique pour finaliser le profil et parvenir à un bon état de surface, exempte de toute micro fissuration.

Au cours de toutes ces passes, le fluide diélectrique circule entre l'alésage 2 et l'électrode 11, soit par injection, soit par aspiration. De même, l'électrode 11 est animée de pulsations radiales à l'alésage 2 pour favoriser la circulation du fluide.

Lors de ces différentes passes d'usinage les paramètres mentionnés à titre d'exemple dans le tableau ci-dessous ont été utilisés pour la réalisation d'un taraudage de type M18 x 2 au profil ISO.

| Passes | courant | Durée Pulsations | Temps pause | Débit fluide | Pulsations | | Profondeur de passe |
|---|---|---|---|---|---|---|---|
| | | | | | usinage | retrait | |
| | A | µs | µs | I/h | s | s | mm |
| préébauche | 24 | 25 | 25 | 20 | 1,6 | 0,1 | 0,6 |
| ébauche | 48 | 50 | 50 | 20 | 1,6 | 0,1 | 1,5 |
| Semi-finition | 16 | 25 | 25 | 20 | 1,6 | 0,1 | 1,7 |
| finition | 8 | 12,8 | 12,8 | 20 | 1,6 | 0,1 | 1,8 |

Le procédé selon l'invention est applicable à tous les types de taraudage. Il permet de réaliser des taraudages de différents standards en adaptant le profil de l'électrode. Pour un même standard ou une même norme, différentes valeurs de diamètre et différentes valeurs de pas sont réalisables à partir du même profil d'électrode par simple homothétie et en conservant le même mode opératoire.

Le procédé de réalisation d'un taraudage par électroérosion selon l'invention est applicable à toute installation en milieu hostile où l'usinage à distance doit être mise en oeuvre et il s'applique notamment aux réacteurs nucléaires.

## Revendications

1. Procédé de réalisation d'un taraudage dans un alésage (2) par usinage automatique commandé à distance, **caractérisé en ce que** :
- on introduit dans l'alésage (2) une électrode (11) munie de filets (20) dont la forme et les dimensions ont été préalablement déterminées en fonction de la forme et les dimensions des filets du taraudage à obtenir,
- on usine par électroérosion les filets du taraudage en déplaçant de manière orbitale l'électrode (11) dans l'alésage (2), sans rotation sur elle-même et selon un nombre prédéterminé de passes, et
- on règle les paramètres d'usinage en fonction de chaque passe à effectuer.

2. Procédé selon la revendication 1, **caractérisé en ce que** l'ensemble des passes est effectué par une seule électrode (11) dont la forme et les dimensions des filets sont déterminés pour tenir compte de leur usure au cours de ces passes et pour obtenir des filets souhaités du taraudage.

3. Procédé selon la revendication 1 ou 2, **caractérisé en ce que** l'ensemble des passes comprend :
- une passe de préébauche,
- une passe d'ébauche, et
- au moins une passe de finition.

4. Procédé selon l'une quelconque des revendications 1 à 3, **caractérisé en ce que** le réglage des paramètres d'usinage au cours desdites passes consiste à modifier au moins l'intensité et la durée des impulsions du courant et la profondeur de la passe de l'électrode (11).

5. Procédé selon l'une quelconque des revendications 1 à 4, **caractérisé en ce qu'**au cours de chaque passe et simultanément au déplacement orbital de l'électrode (11), on imprime à cette électrode (11) des pulsations radiales à l'alésage.

## Claims

1. Method of producing a tapping in a bore (2) by remote-controlled automatic machining, **characterised in that**:
- there is introduced into the bore (2) an electrode (11) provided with threads (20) whose shape and dimensions have been determined beforehand as a function of the shape and dimensions of the threads of the tapping to be obtained,
- the threads of the tapping are machined by means of electric discharge machining by orbitally displacing the electrode (11) in the bore (2), without rotating it about itself and in accordance with a predetermined number of passes, and
- the machining parameters are regulated as a function of each pass to be carried out.

2. Method according to claim 1, **characterised in that** the set of passes is carried out by a single electrode (11) the shape and dimensions of the threads of which are determined so as to take account of their wear in the course of these passes and so as to obtain desired threads of the tapping.

3. Method according to claim 1 or 2, **characterised in that** the set of passes comprises:
- a pre-roughing pass,
- a roughing pass, and
- at least one finish pass.

4. Method according to any one of claims 1 to 3, **characterised in that** the regulation of the machining parameters in the course of said passes consists of modifying, at least, the intensity and duration of the pulses of current and the depth of the pass of the electrode (11).

5. Method according to any one of claims 1 to 4, **characterised in that** in the course of each pass and simultaneously with the orbital displacement of the electrode (11), pulsed movements radial to the bore are applied to this electrode (11).

## Patentansprüche

1. Verfahren zum Realisieren eines Innengewindes in einer Bohrung (2) mittels ferngesteuerter automatischer Bearbeitung, **dadurch gekennzeichnet, dass**:
- eine Elektrode (11), die mit Gewindewänden (20) versehen ist, deren Form und Abmessungen zuvor in Abhängigkeit von der Form und den Abmessungen der Gewindewände des zu erhaltenden Innengewindes bestimmt wurden, in die Bohrung (2) eingeführt wird,
- die Gewindewände des Innengewindes mittels Elektroerosion herausgearbeitet werden, wobei die Elektrode (11) in der Bohrung (2) orbital, ohne Drehung um sich selbst und gemäß einer vorbestimmten Anzahl von Durchläufen bewegt wird, und
- die Bearbeitungsparameter in Abhängigkeit von jedem durchzuführenden Durchlauf gesteuert werden.

2. Verfahren gemäß Anspruch 1, **dadurch gekennzeichnet, dass** die Gesamtheit der Durchläufe mit einer einzigen Elektrode (11) durchgeführt wird, wobei die Form und die Abmessungen der Gewindewände davon bestimmt werden, um ihre Abnutzung während der Durchläufe zu berücksichtigen und um gewünschte Gewindewände für das Innengewinde zu erhalten.

3. Verfahren gemäß Anspruch 1 oder 2, **dadurch gekennzeichnet, dass** die Gesamtheit der Durchläufe aufweist:
- einen Vor-Rohbearbeitungsdurchlauf,
- einen Rohbearbeitungsdurchlauf, und
- mindestens einen Fertigstellungsdurchlauf.

4. Verfahren gemäß einem der Ansprüche 1 bis 3,
**dadurch gekennzeichnet, dass** das Steuern der Bearbeitungsparameter während der Durchläufe daraus besteht, mindestens die Stärke und die Dauer der Stromimpulse und die Tiefe des Durchlaufs der Elektrode (11) zu verändern.

5. Verfahren gemäß einem der Ansprüche 1 bis 4,
**dadurch gekennzeichnet, dass** während jedes Durchlaufs und gleichzeitig mit dem orbitalen Bewegen der Elektrode (11) zu der Bohrung radiale Schwingungen auf die Elektrode (11) aufgebracht werden.
